# EUROPEAN PATENT SPECIFICATION

(11) **EP 1 780 082 B1**
(45) Date of publication and mention of the grant of the patent: **29.10.2014**
(21) Application number: 05766310.6
(22) Date of filing: 15.07.2005
(51) Int. Cl.: B60R 11/02, F01N 1/00, G10K 11/178

(54) **ACTIVE NOISE REDUCING DEVICE**
AKTIVE GERÄUSCHDÄMPFUNGSVORRICHTUNG
DISPOSITIF ACTIF REDUCTEUR DE BRUIT

(30) Priority: 28.07.2004 JP 2004220112
(43) Date of publication of application: 02.05.2007
(73) Proprietor: Panasonic Corporation, Kadoma-shi Osaka 571-8501 (JP); HONDA GIKEN KOGYO KABUSHIKI KAISHA, Minato-ku, Tokyo 107-8556 (JP)
(72) Inventor: KAN, Yoichi, Chuo-ku, Osaka-shi, Osaka 540-6319 (JP); NAKAMURA, Yoshio, Chuo-ku, Osaka-shi, Osaka 540-6319 (JP); ONISHI, Masahide, Chuo-ku, Osaka-shi, Osaka 540-6319 (JP); INOUE, Toshio, Saitama 351-0133 (JP); TAKAHASHI, Akira, Saitama 351-0133 (JP); KOBAYASHI, Yasunori, Saitama 351-0133 (JP)
(74) Representative: Haley, Stephen
(86) International application number: PCT/JP2005/013127
(87) International publication number: WO 2006/011380

(56) References cited:
- JP-A- 2000 099 037
- JP-A- 2005 084 500
- JP-B2- 3 449 838
- US-A- 5 278 913
- US-A- 5 332 061
- US-A- 5 581 619

## Description

### TECHNICAL FIELD

The present invention relates to an active noise control system which reduces annoying noise in the vehicle interior caused by engine rotation or drive of the vehicle through the interfering action of phase inverted signals, and more particularly to an active noise control system that suppresses abnormal noise caused by a failure in the noise control action.

### BACKGROUND ART

Muffled sound of engine forms part of the noise in the vehicle interior, and has a clear cycle that synchronizes with the engine rpm because it is radiation sound generated by the resonance of an enclosed space or the vehicle interior, which occurs under certain conditions when the exciting force generated by the engine rotation is transmitted to the vehicle interior.

One known conventional active noise control system that reduces such annoying muffled sound of engine adopts a feed forward adaptive control method using an adaptive notch filter (see, for example, Patent Document 1).

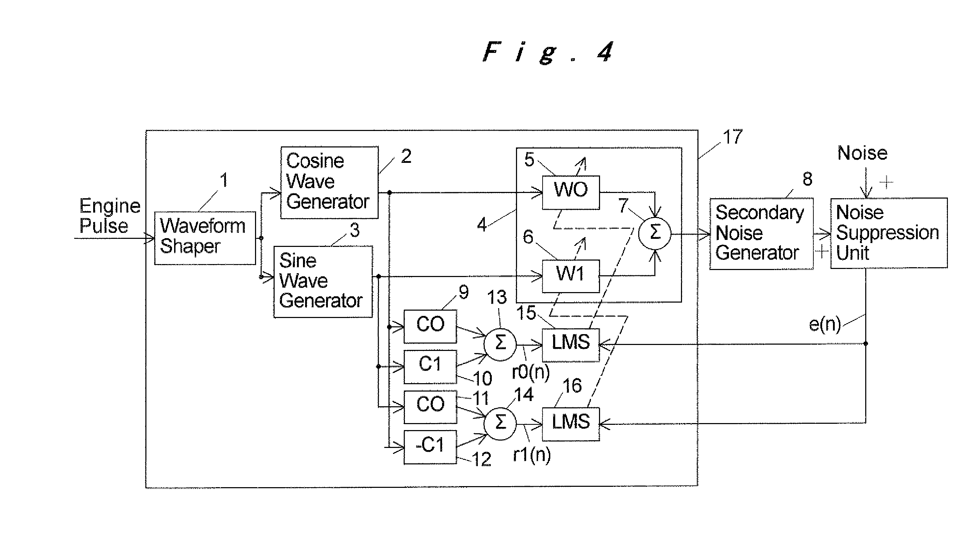

Fig. 4 is a block diagram showing the configuration of the conventional active noise control system; the configuration and operation of the system will be described below with reference to Fig. 4. Discrete processing for realizing the active noise control system is performed in a discrete signal processing unit 17 such as a DSP (digital signal processor). First, noise or the like that is superposed to the engine pulses is removed by a waveform shaper 1 to shape the waveform. The output signal from the waveform shaper 1 is input to a cosine wave generator 2 and a sine wave generator 3 to create a cosine wave and a sine wave as reference signals.

A reference cosine wave signal, which is an output signal from the cosine wave generator 2, is multiplied by a filter coefficient W0 of a first 1-tap adaptive filter 5, which is one of adaptive notch filters 4. Similarly, a reference sine wave signal, which is an output signal from the sine wave generator 3, is multiplied by a filter coefficient W1 of a second 1-tap adaptive filter 6, which is one of adaptive notch filters 4. The output signal from the first 1-tap adaptive filter 5 and the output signal from the second 1-tap adaptive filter 6 are added by an adder 7, and input to a secondary noise generator 8.

The secondary noise generator 8 generates secondary noise to cancel the noise caused by engine pulses through the interfering action. A residual signal, which represents noise that was not removed in the noise suppression unit, is used as an error signal e in the adaptive control algorithm.

Meanwhile, the reference cosine wave signal is input to a transmission element 9, which generates a signal C0 that simulates transmission characteristics from the secondary noise generator 8 to the noise suppression unit at the notch frequency of the sound to be removed that is determined from the engine rpm. Likewise, the reference sine wave signal is input to a transmission element 10, which generates a signal C1 that simulates transmission characteristics from the secondary noise generator 8 to the noise suppression unit. Output signals from the transmission elements 9 and 10 are added by an adder 13 to generate a simulated cosine wave signal r0, which is input to an adaptive control algorithm processor 15 together with the error signal e to renew the filter coefficient W0 of the adaptive notch filter 4 based on an adaptive control algorithm, for example, the LMS (least mean square) algorithm, which is one type of gradient decent methods.

Similarly, the reference sine wave signal is input to a transmission element 11, which generates a signal C0 that simulates transmission characteristics from the secondary noise generator 8 to the noise suppression unit at the notch frequency of the sound to be removed that is determined from the engine rpm. Likewise, the reference cosine wave signal is input to a transmission element 12, which generates a signal - C1 that simulates transmission characteristics from the secondary noise generator 8 to the noise suppression unit. Output signals from the transmission elements 11 and 12 are added by an adder 14 to generate a simulated sine wave signal r1, which is input to an adaptive control algorithm processor 16 together with the error signal e to renew the filter coefficient W1 of the adaptive notch filter 4 based on an adaptive control algorithm, for example, the LMS algorithm.

Thus the filter coefficients W0 and W1 of the adaptive notch filters 4 converge to optimal values recursively so that the error signal e is smaller, i.e., so that the noise in the noise suppression unit is reduced.
[Patent Document 1] Japanese Patent Publication No. 2000-99037

### DISCLOSURE OF THE INVENTION

With the above-described conventional configuration, however, when there is a sudden change in the engine pulses, the renewal speed of the adaptive notch filter coefficients becomes too fast to follow with the result that the coefficients diverge instead of converge, posing the risk that abnormal sound may be generated.

The present invention was devised to solve the above-described problem in the conventional technique, its object being to provide an active noise control system, with which, even when there is a sudden change in the engine pulses, the user will not hear any abnormal sound from the active notch filters.

US5581619A discloses a vehicle internal noise reduction system and method using a finite impulse response (FIR) filter. US55278913A discloses an active acoustic attenuation system with power limiting which uses adaptive filter models.

The invention consists in an active noise control system that cancels noise using secondary noise generating means to which a signal is input from an adaptive notch filter of a signal processing unit which is comprised of :
a cosine wave generator that generates a cosine wave signal being synchronized with a cyclic noise radiated from an engine;
a sine wave generator that generates a sine wave signal; and
the adaptive notch filter, which is comprised of:
   a first one-tap adaptive filter to which the sine wave signal is input as a reference sine wave signal;
   a second one-tap adaptive filter to which the cosine wave signal is input as a reference cosine wave signal; and
   an adder that adds the signals respectively output from the first one-tap adaptive filter and the second one-tap adaptive filter, each filter coefficient of the first and second one-tap adaptive filters being variably adapted,
   the active noise control system further comprising input stop means that is driven to stop the input of the signal from the adaptive notch filter to the secondary noise generating means when a sudden change of the engine condition is detected.

The input stop means is driven when a difference between a current engine pulse and a past engine pulse within a predetermined time period exceeds a predetermined value, or, acceleration degree of pressing of an acceleration pedal exceeds a predetermined level, or, a shift change is detected, or, a shift-up of gears is detected.

### BRIEF DESCRIPTION OF THE DRAWINGS

Fig. 1 is a block diagram showing the configuration of an active noise control system according to a first embodiment of the present invention;
Fig. 2 is a block diagram showing the configuration of an active noise control system according to a second embodiment of the present invention;
Fig. 3 is a block diagram showing the configuration of an active noise control system according to a third embodiment of the present invention; and
Fig. 4 is a block diagram showing the configuration of a conventional active noise control system.

### BEST MODE FOR CARRYING OUT THE INVENTION

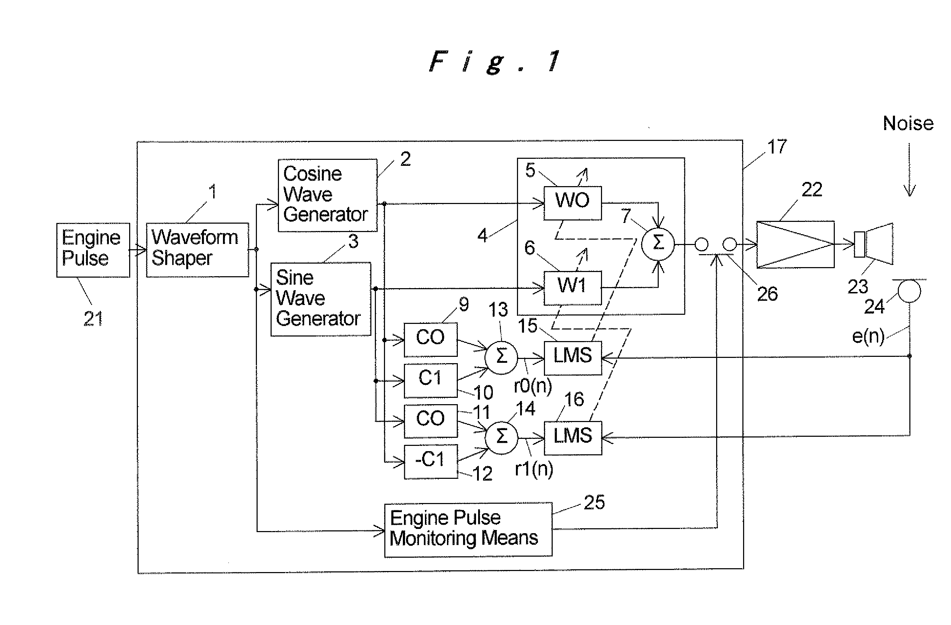

Preferred embodiments of the active noise control system of the present invention will be hereinafter described with reference to Fig. 1 to Fig. 3. Like elements to those of the conventional active noise control system described with reference to Fig. 4 are given the same reference numerals and will not be described again.

### (First Embodiment)

Fig. 1 is a block diagram showing the configuration of an active noise control system according to a first embodiment of the present invention.

In Fig. 1, 21 denotes engine pulses of the engine, which is the source of noise that is to be reduced; this active noise control system operates to reduce cyclic noise radiated from the engine.

Engine pulse 21, which is an electric signal synchronizing with the engine rotation, is input to a waveform shaper 1, so that any noise or the like superposed to the signal is removed and the waveform is shaped. Output signals from a TDC (top dead center) sensor or tachometer pulses may be used as the engine pulses 21. Tachometer pulse data, in particular, is often provided to the vehicle side as an input signal from the tachometer, and so there is no need to provide a special device for the purpose.

Output signal from the waveform shaper 1 is input to a cosine wave generator 2 and a sine wave generator 3 to create a cosine wave and a sine wave as reference signals which synchronize with the notch frequency of the sound that is to be removed and that is determined from the engine pulses 21 (hereinafter simply "notch frequency"). The output signal from the cosine wave generator 2, or a reference cosine wave signal, is multiplied by a filter coefficient W0 of a first 1-tap adaptive filter 5, which is one of adaptive notch filters 4. Similarly, the output signal from the sine wave generator 3, or a reference sine wave signal, is multiplied by a filter coefficient W1 of a second 1-tap adaptive filter 6, which is one of adaptive notch filters 4.

Then, the output signal from the first 1-tap adaptive filter 5 and the output signal from the second 1-tap adaptive filter 6 are added by an adder 7, and input to a power amplifier 22 and a speaker 23, which constitute secondary noise generating means.

The output signal from the adder 7, or the output from the adaptive notch filters 4, is power-amplified by the power amplifier 22, and radiated from the speaker 23 as secondary noise to cancel the noise that is to be reduced. Noise that has not been removed by the interference between the secondary noise and the noise that is to be reduced in the noise suppression unit is detected by a microphone (residual signal detecting means) 24 as a residual signal, which is used as an error signal e in the adaptive control algorithm to renew the filter coefficients W0 and W1 of the adaptive notch filters 4.

Transmission elements 9 to 12 and adders 13 and 14 constitute a simulated signal generating means for generating a signal that simulates transmission characteristics from the power amplifier 22 to the microphone 24 at the notch frequency (hereinafter simply "transmission characteristics").

The reference cosine wave signal is input to the transmission element 9 first, and likewise the reference sine wave signal is input to the transmission element 10. Output signals from the transmission elements 9 and 10 are added by the adder 13 to generate a simulated cosine wave signal r0. This simulated cosine wave signal r0 is input to an adaptive control algorithm processor 15 to be used for the adaptive control algorithm to renew the filter coefficient W0 of the first 1-tap adaptive filter 5.

Similarly, the reference sine wave signal is input to the transmission element 11, and likewise the reference cosine wave signal is input to the transmission element 12. Output signals from the transmission elements 11 and 12 are added by the adder 14 to generate a simulated sine wave signal r1. This simulated sine wave signal r1 is input to an adaptive control algorithm processor 16 to be used for the adaptive control algorithm to renew the filter coefficient W1 of the second 1-tap adaptive filter 6.

As described above, this active noise control system detects a notch frequency from engine pulses to cause the adaptive notch filter to output signals and repeats adaptive control until the error signal e converges to zero. Therefore, if there is a sudden change in the engine pulses for some reason, the notch frequency changes before the error signal is converged, because of which not only the normal noise reduction (control) effect is not achieved, but also it is highly possible that, in the worst case, the filter coefficients W_{N} of the adaptive notch filters 4 diverge, causing abnormal sound generated from the speaker 23 through the power amplifier 22.

Accordingly, it is necessary to detect a sudden change in the engine pulses immediately and to stop the output of the adaptive notch filters before the filter coefficients W_{N} of the adaptive notch filters 4 take an abnormal value and diverge.

In this embodiment, to achieve the above, engine pulse monitoring means 25 and a switch (input stop means) 26 that is turned on and off by this engine pulse monitoring means 25 are provided inside a discrete signal processing unit 17. Output from the waveform shaper 1 that is input to the cosine wave generator 2 and sine wave generator 3 is branched and input to the engine pulse monitoring means 25, so that it is constantly monitored whether the difference between the current value and one past value within a predetermined time period exceeds a constant value.

If the difference in the engine pulses exceeds a constant value, the engine pulse monitoring means 25 determines that there is abnormality and engine pulses are suddenly changing, and turns off the switch 26 immediately, so as to stop the output from the adaptive notch filters 4 into the power amplifier 22 and speaker 23, which are the secondary noise generating means, and to prevent abnormal sound from being output from the adaptive notch filters 4 due to the sudden change in the engine pulses. These engine pulse monitoring means 25 and switch 26 are provided inside the discrete signal processing unit 17 as software.

As described above, in this embodiment, the engine pulse monitoring means 25 is provided as means of monitoring the engine for a sudden change of the condition, and with this means, when a sudden change is detected, the output from the adaptive notch filters 4 into the secondary noise generating means 23 is stopped using input stop means or the switch 26, to prevent abnormal sound from being output.

Means of monitoring the engine for a sudden change of the condition should not be limited to the above-described engine pulse monitoring means 25, and other means are possible. Other embodiments of the active noise control systems that use other monitoring means will be described in the following.

### (Second Embodiment)

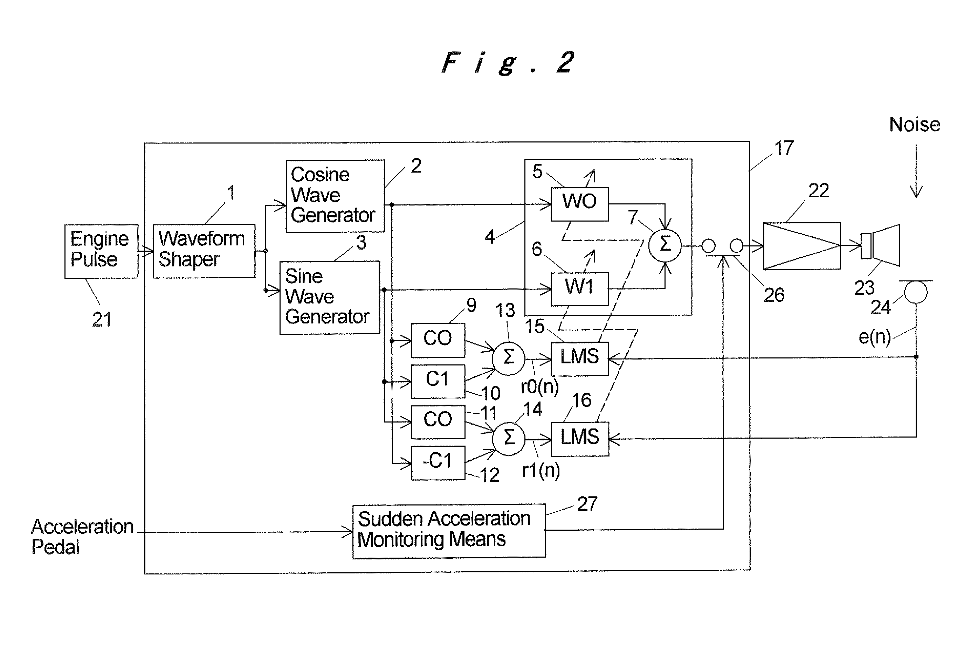

Next, a second embodiment will be described with reference to Fig. 2. Fig. 2 is a block diagram showing the configuration of an active noise control system according to the second embodiment. Like elements to those of the first embodiment are given the same reference numerals and will not be described again.

In this embodiment, as means of monitoring the engine for a sudden change of the condition, instead of the engine pulse monitoring means 25 of the first embodiment, sudden acceleration monitoring means 27 is provided, and it is configured that the output from the adaptive notch filters 4 into the secondary noise generating means is stopped using input stop means or the switch 26.

Acceleration degree, or the force applied to the acceleration pedal when it is pressed, is input to the sudden acceleration monitoring means 27, and it is constantly monitored whether the difference between the current value and one past value within a predetermined time period exceeds a constant value.

A change over a constant value is determined as rapid acceleration by the sudden acceleration monitoring means 27, which turns off the switch 26 immediately. Thus, a sudden change in the engine pulses due to rapid acceleration is detected, and it is prevented that abnormal sound is output from the adaptive notch filters 4, which is caused by a failure in following the sudden change in the engine pulses. These sudden acceleration monitoring means 27 and switch 26 are provided inside the discrete signal processing unit 17 as software.

### (Third Embodiment)

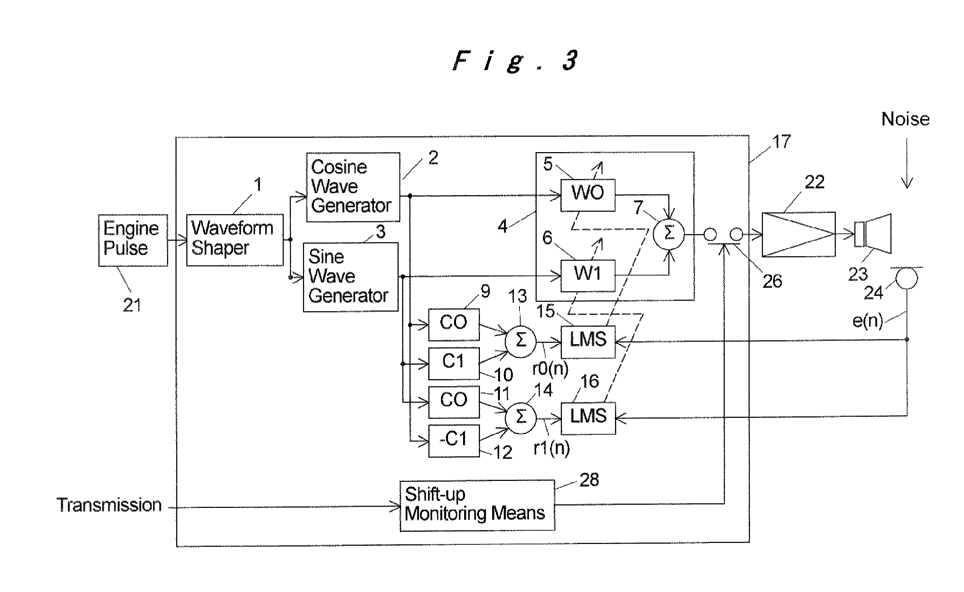

Next, a third embodiment of the present invention will be described with reference to Fig. 3. Fig. 3 is a block diagram showing the configuration of an active noise control system according to the present embodiment. Like elements to those of the first embodiment are given the same reference numerals and will not be described again.

In this embodiment, as means of monitoring the engine for a sudden change of the condition, instead of the engine pulse monitoring means 25 of the first embodiment, shift-up monitoring means 28 is provided, and it is configured that the output from the adaptive notch filters 4 into the secondary noise generating means is stopped using an input stop means or the switch 26.

The shift-up monitoring means 28 turns off the switch 26 immediately when the transmission is shifted up. Thus, a sudden change in the engine pulses when the transmission is shifted up is detected, and it is prevented that abnormal sound is output from the adaptive notch filters 4, which is caused by a failure in following the sudden change in the engine pulses. These shift-up monitoring means 28 and switch 26 are provided inside the discrete signal processing unit 17 as software.

The engine rpm decreases rapidly when the transmission is shifted up, and increases rapidly when the transmission is shifted down. It has been described that the switch 26 is driven when the transmission is shifted up in this embodiment so as to prevent generation of abnormal sound caused by diversion of the filter coefficients W_{N} of the adaptive notch filters 4, because the noise with a sudden drop in the engine rpm caused by a shift-up of gears is generally felt more aurally annoying than the noise with a sudden increase in the engine rpm caused by a shift-down of gears. Alternatively, instead of the shift-up monitoring means 28, shift up/down monitoring means for detecting both a shift-up and a shift-down of gears may be provided, and the switch 26 may be driven when either a shift-up or a shift-down of gears is detected. Such means are suitably selected depending on the engine characteristics.

### INDUSTRIAL APPLICABILITY

As described above, according to the present invention an abnormality caused by a sudden change in the engine rpm, in which the renewal speed of the adaptive notch filter coefficients becomes too fast to follow, is detected, and the output from the adaptive notch filters into the secondary noise generating means is stopped before the filter coefficients diverge, to prevent abnormal sound from being output from the adaptive notch filters, and therefore the present invention is useful as an active noise control system for cars.

## Claims

1. An active noise control system that cancels noise using secondary noise generating means (23) to which a signal is input from an adaptive notch filter (4) of a signal processing unit (17) which is comprised of:
a cosine wave generator (2) that generates a cosine wave signal being synchronized with the notch frequency of cyclic noise radiated from an engine;
a sine wave generator (3) that generates a sine wave signal being synchronized with the notch frequency; and
the adaptive notch filter, which is comprised of:
a first one-tap adaptive filter (6) which multiplies the sine wave signal by a first filter coefficient (W1) ;
a second one-tap adaptive filter (5) to which multiplies the cosine wave signal by a second filter coefficient (W0) ; and
an adder (7) that adds the signals respectively output from the first one-tap adaptive filter and the second one-tap adaptive filter, each filter coefficient (W0, W1) of the first and second one-tap adaptive filters being variably adapted,
the active noise control system further comprising input stop means (26) that is driven to stop the input of the signal from the adaptive notch filter (4) to the secondary noise generating means (22, 23) when a sudden change of the engine condition is detected.

2. The active noise control system according to claim 1, wherein the input stop means (26) is driven when a difference between a current engine pulse and a past engine pulse within a predetermined time period exceeds a predetermined value.

3. The active noise control system according to claim 1, comprising means to detect an acceleration degree of pressing of an acceleration pedal when the acceleration pedal is pressed and means to drive the input stop means (26) when the acceleration degree of pressing of the acceleration pedal exceeds a predetermined level.

4. The active noise control system according to claim 1, comprising means to detect a shift change and drive the input stop means (26).

5. The active noise control system according to claim 1, comprising means to detect a shift-up of gears and drive the input stop means (26).

## Patentansprüche

1. Aktives Geräuschkontrollsystem, das Geräusch unter Verwendung sekundärer Geräuschgeneriermittel (23) aufhebt, in die ein Signal von einem adaptiven Notchfilter (4) einer Signalverarbeitungseinheit (17) eingegeben wird, die aus Folgendem besteht:
einem Cosinus-Wellengenerator (2), der ein Cosinus-Wellensignal generiert, das mit der Notchfrequenz von zyklischem Geräusch synchronisiert wird, das von einem Motor ausgestrahlt wird;
einem Sinus-Wellengenerator (3), der ein Sinus-Wellensignal generiert, das mit der Notchfrequenz synchronisiert wird; und
dem adaptiven Notchfilter, der aus Folgendem besteht:
einem ersten adaptiven Filter (6) mit Einzelabgriff, der das Sinus-Wellensignal um einen ersten Filterkoeffizienten (W1) multipliziert;
einem zweiten adaptiven Filter (5) mit Einzelabgriff, der das Cosinus-Wellensignal um einen zweiten Filterkoeffizienten (W0) multipliziert; und
einem Addierer (7), der die Signale addiert, die vom ersten adaptiven Filter mit Einzelabgriff bzw. dem zweiten adaptiven Filter mit Einzelabgriff ausgegeben wurden, wobei jeder Filterkoeffizient (W0, W1) der ersten und zweiten adaptiven Filter mit Einzelabgriff variabel adaptiert wird,
wobei das aktive Geräuschkontrollsystem ferner ein Eingabe-Stoppmittel (26) umfasst, das angetrieben wird, die Eingabe des Signals vom adaptiven Notchfilter (4) zum zweiten Geräuschgeneriermittel (22, 23) zu stoppen, wenn eine plötzliche Änderung des Motorzustands detektiert wird.

2. Aktives Geräuschkontrollsystem nach Anspruch 1, wobei das Eingabe-Stoppmittel (26) angetrieben wird, wenn eine Differenz zwischen einem aktuellen Motorimpuls und einem beendeten Motorimpuls innerhalb einer vorgegebenen Zeitspanne einen vorgegebenen Wert überschreitet.

3. Aktives Geräuschkontrollsystem nach Anspruch 1, das Mittel zum Detektieren eines Beschleunigungsgrads des Drückens eines Gaspedals, wenn das Gaspedal gedrückt wird und Mittel zum Antreiben des Eingabe-Stoppmittels (26) umfasst, wenn der Beschleunigungsgrad des Drückens des Gaspedals ein vorgegebenes Niveau überschreitet.

4. Aktives Geräuschkontrollsystem nach Anspruch 1, das Mittel umfasst, um einen Gangwechsel und Antrieb des Eingabe-Stoppmittels (26) zu detektieren.

5. Aktives Geräuschkontrollsystem nach Anspruch 1, das Mittel umfasst, um ein Hochschalten von Gängen und Antrieb des Eingabe-Stoppmittels (26) zu detektieren.

## Revendications

1. Système actif réducteur de bruit qui annule le bruit en se servant d'un moyen secondaire de génération de bruit (23) vers lequel est envoyé un signal qui provient d'un filtre réjecteur réglable adaptable (4) dans une unité de traitement de signaux (17) comprenant:
un générateur d'ondes cosinusoïdales (2) servant à produire un signal cosinusoïdal qui est synchronisé avec la fréquence de coupure du bruit cyclique produit par un moteur;
un générateur d'ondes sinusoïdales (3) servant à produire un signal sinusoïdal qui est synchronisé avec la fréquence de coupure; et
le filtre réjecteur réglable adaptable, comportant:
un premier filtre adaptable à un seul coefficient (6) servant à multiplier le signal sinusoïdal par un premier coefficient de filtrage (W1);
un deuxième filtre adaptable à un seul coefficient (5) servant à multiplier le signal cosinusoïdal par un deuxième coefficient de filtrage (W0);
un additionneur (7) servant à additionner les signaux respectivement produits à la sortie par le premier filtre adaptable à un seul coefficient et le deuxième filtre adaptable à un seul coefficient, chaque coefficient de filtrage (W0, W1) des premier et deuxième filtres adaptables à un seul coefficient étant adapté de manière variable,
le système actif réducteur de bruit comprenant par ailleurs un moyen d'arrêt du signal d'arrivée (26) qui est commandé de manière à arrêter l'introduction du signal venant du filtre réjecteur réglable adaptable (4) et se rendant au moyen secondaire de génération de bruit (22, 23) dès qu'il y a détection d'un changement soudain de l'état du moteur.

2. Système actif réducteur de bruit selon la revendication 1, **caractérisé en ce que** le moyen d'arrêt du signal d'arrivée (26) est commandé lorsque la différence entre une impulsion actuelle du moteur et une impulsion antérieur du moteur dépasse une certaine valeur prédéterminée dans une période de temps prédéterminée.

3. Système actif réducteur de bruit selon la revendication 1, comportant un moyen de détecter un degré d'accélération consécutif à l'appui de la pédale d'accélération, et aussi un moyen de commander le moyen d'arrêt du signal d'arrivée (26) lorsque le degré d'accélération consécutif à l'appui de la pédale d'accélération dépasse un certain niveau prédéterminé.

4. Système actif réducteur de bruit selon la revendication 1, comportant un moyen de détecter un changement du rapport de vitesse et commander le moyen d'arrêt du signal d'arrivée (26).

5. Système actif réducteur de bruit selon la revendication 1, comportant un moyen de détecter le passage à un rapport de vitesse supérieur et commander le moyen d'arrêt du signal d'arrivée (26).
